# EUROPÄISCHE PATENTSCHRIFT

(11) **EP 0 643 103 B1**
(45) Veröffentlichungstag und Bekanntmachung des Hinweises auf die Patenterteilung: **07.07.1999**
(21) Anmeldenummer: 94112176.6
(22) Anmeldetag: 04.08.1994
(51) Int. Cl.: C08L 63/10, C08L 63/00, C09J 163/10, C09J 163/00

(54) **Härtbare Bindemittel**
Curable binders
Liants durcissables

(30) Priorität: 10.09.1993 DE 4330684
(43) Veröffentlichungstag der Anmeldung: 15.03.1995
(73) Patentinhaber: Bakelite AG, 58642 Iserlohn-Letmathe (DE)
(72) Erfinder: Grundke, Ulrich, D-47137 Duisburg (DE); Liebetanz, Klaus-Peter, D-47138 Duisburg (DE)

(56) Entgegenhaltungen:
- EP-A- 0 237 255
- EP-A- 0 282 634
- EP-A- 0 502 611
- DE-B- 2 406 400
- PATENT ABSTRACTS OF JAPAN, unexamined applications, Field C, Band 4, Nr. 50, 16. April 1980 THE PATENT OFFICE JAPANESE GOVERNMENT Seite 152 C 7; & JP-A-55 23 143 (ASAHI KASEI KOGYO K.K.)

## Beschreibung

Die vorliegende Erfindung betrifft härtbare Bindemittel auf der Basis von Epoxidharz-Mischungen, die sich insbesondere als bei Raumtemperatur härtende Klebstoffe mit guter Haftung bei Zug-Scherbeanspruchung eignen.

Derartige Bindemittel sind aus DE-A 41 05 481 bekannt. Diese Schrift erwähnt Zusammensetzungen aus Epoxidharz-Komponenten und polyfunktionellen Acrylaten, wie z. B. Polyethylenglykoldiacrylat, die jedoch infolge Wasseraufnahme eine verschlechterte Wasserwiderstandsfähigkeit haben.

Die Verbesserung durch die Erfindung gemäß DE-A 41 05 481 besteht in der Abmischung von Epoxidharzen mit aromatischen, monofunktionellen (Meth)acrylaten. Die Festigkeit bei Zug-Scherbeanspruchung dieser Mischungen erfüllen aber nicht die Ansprüche, die an einen hochwertigen Klebstoff, bzw. an ein hochwertiges Bindemittel gestellt werden.

Aus JP-A 55 23 143 sind bei Raumtemperatur schnell härtende Bindemittel für Beschichtungen und Formmassen bekannt, die aus einem ungesättigten Epoxyester und einem Polyamin oder Polyamid bestehen. Diese Bindemittel sind aber nicht wasserfest und daher nicht zur Verwendung als hochwerige Klebstoffe geeignet.

Es ist daher Aufgabe der vorliegenden Erfindung, bei Raumtemperatur härtbare Bindemittel bereitzustellen, die in relativ kurzer Zeit aushärten, gute Haftfestigkeiten, insbesondere bei Zug-Scherbeanspruchung ergeben und die eine gute Wasserwiderstandsfähigkeit haben.

Die Lösung der Aufgabe erfolgt durch Bindemittel gemäß der Ansprüche 1 bis 4. Diese Bindemittel finden Verwendung als Bindemittel für Dübel- und Ankermassen, für Dicht- und Klebstoffe für die Isolierglasherstellung sowie als Injektionsharze, gemäß der Ansprüche 5 bis 7.

Es wurde gefunden, daß Gemische aus Epoxidharz mit mindestens zwei Epoxidgruppen im Molekül und Partialester einer Di- oder Polyepoxidverbindung mit einer ethylenisch ungesättigten Säure im Gewichtsverhältnis von 90 : 10 bis 10 : 90, insbesondere von 70 : 30 bis 30 : 70, wenn sie mit einer aminischen Verbindung mit mindestens einer primären Aminogruppe im Molekül gemischt werden, bei Raumtemperatur innerhalb 6 bis 10 h aushärten.

Die Mischungen bilden, wenn sie in noch verarbeitbarem Zustand auf einen entsprechenden Untergrund aufgebracht werden, eine ausgezeichnete Haftung zu einer Vielzahl von Substraten aus, wie z. B. zu Glas, Stein, Metall, Holz und Kunststoffen, hier insbesondere zu solchen aus polaren Molekülen, wie z. B. PVC, Polyester, Polyamid, Phenolharz, Epoxidharz oder Polyacrylat.

Sie eignen sich somit als Bindemittel zum Verkleben gleichartiger Substrate aber auch von Substraten unterschiedlicher Art miteinander. Die Bindemittel haben auch bei mehrstündiger Lagerung in kochendem Wasser eine geringe Wasseraufnahme. Damit ist eine gute Wasserwiderstandsfähigkeit gegeben.

Als Epoxidharz-Komponente für die Mischung können alle Epoxidverbindungen mit mindestens zwei Epoxidgruppen im Molekül eingesetzt werden. Bevorzugt werden Polyepoxidverbindungen auf der Basis von Bisphenolen oder Phenol-bzw. Kresol-novolaken. Zur Viskositätsregulierung können diesen Harzen difunktionelle aromatische oder aliphatische Epoxidverbindungen, sog. Reaktivverdünner zugesetzt werden.

Partialester einer Di- oder Polyepoxidverbindung mit einer ethylenisch ungesättigten Säure sind an sich bekannte Umsetzungsprodukte aus Epoxidverbindungen mit mindestens zwei Epoxidgruppen im Molekül mit einer ethylenisch ungesättigten Säure. Beispiele für derartige Säuren sind Acryl-, Methacryl-, Zimt- oder Furylacrylsäure. Bei dieser an sich bekannten Umsetzung wird das Mengenverhältnis von Epoxidgruppen zu ethylenisch ungesättigter Säure so gewählt, daß der entstehende Partialester im Durchschnitt mindestens eine Epoxid- und eine ethylenisch ungesättigte Gruppe im Molekül enthält.

So werden z. B. Diepoxidverbindungen mit 40 bis 50 % der den Epoxidgruppen äquivalenten Menge an ethylenisch ungesättigter Säure umgesetzt. Bei Polyepoxidverbindungen liegt das Molverhältnis Epoxidgruppen zu ethylenisch ungesättigter Säure im Bereich von 2 : 0,5 bis 2 : 1,5.

Epoxidharz und Partialester einer Di- oder Polyepoxidverbindung mit einer ethylenisch ungesättigten Säure werden im Gewichtsverhältnis von 90 : 10 bis 10 : 90, bevorzugt von 70 : 30 bis 30 : 70 miteinander vermischt. Diese Mischungen sind lagerstabil.

Als Härtungsmittel können alle Verbindungen eingesetzt werden, die mindestens eine primäre Aminogruppe enthalten, wie z. B. aliphatische, alicyclische und aromatische Mono-, Di- oder Polyamine aber auch Polyaminoamide. Insbesondere einsetzbar sind die aus der Epoxidharzhärtung bekannten primären Amine, wie sie z. B. auch in Lee und Neville "Handbook of Epoxy Resins", McGraw-Hill Book Company 1967 beschrieben sind.

Die Aminmenge wird so gewählt, daß für jede ungesättigte Bindung und für jede Epoxidgruppe ein Aminwasserstoffatom zur Verfügung steht.

Nach dem Vermischen des Amins mit dem Gemisch aus Epoxidharz und dem dualfunktionalen Partialester einer Di- oder Polyepoxidverbindung mit einer ethylenisch ungesättigten Säure reagieren in einem ersten Schritt die ethylenisch ungesättigten Doppelbindungen sehr rasch mit dem als Härtungsmittel eingesetzten Amin, und in einem weiteren Schritt reagieren die im gleichen Molekül und die im Epoxidharz vorhandenen Epoxidgruppen ebenfalls mit dem Amin.

Die spontan einsetzende Reaktion zwischen Amin und Doppelbindung beschleunigt das System soweit, daß schon nach relativ kurzer Zeit ausgezeichnete Haftungswerte erzielt werden. Die geringe Wasseraufnahme, die ähnlich niedrig wie bei den unmodifizierten Epoxidharzsystemen liegt, läßt sich ebenfalls nur über die Doppelfunktionalität erreichen, da hier auch mit aliphatischen Verbindungen ähnlich gute Werte erzielt werden, wie sonst nur mit aromatischen hydrophoben Verbindungen. Aufgrund ihrer Eigenschaften eignen sich die erfindungsgemäßen Bindemittel als Klebstoffe und Bindemittel für Beschichtungen und Spachtelmassen, insbesondere als Bindemittel für Dübel- und Ankermassen, für Dicht- und Klebstoffe für die Isolierglasherstellung sowie als Injektionsharze.

Bei der praktischen Anwendung können sowohl die Harzals auch die Härterkomponenten mit Füllstoffen, Additiven, Weichmachern oder auch anderen Polymeren vermischt werden. Dadurch können die beiden Komponenten in ihrem Mengenverhältnis so eingestellt werden, daß günstige Mischungsverhältnisse vorliegen.

Beispiele für übliche Füllstoffe sind Kreiden, Silicate oder Oxide, bzw. Oxidhydrate der Elemente Aluminium, Magnesium, Silicium oder Titan. Übliche Additive sind Verdickungsmittel, Pigmente oder Silane, insbesondere Epoxisilane, die eine weitere Verbesserung der Haftung, insbesondere auf silikatischen Untergründen bewirken.

Zusätzliche Polymere sind flüssige merkaptoendständige Polymere, insbesondere solche der allgemeinen Formel

HS-(C₂H₄-O-CH₂-O-C₂H₄-SS)ₙ-C₂H₄-O-CH₂-O-C₂H₄-SH

mit n = 3 bis 8, die bevorzugt der Aminkomponente zugegeben werden sowie Umsetzungsprodukte aus flüssigen, merkaptoendständigen Polymeren mit einem Di- oder Polyacrylat oder - methacrylat, wie sie z. B. aus EP-A 0 502 611 bekannt sind. Beide Polymere, die bis zu 50 % des gesamten Bindemittels darstellen können, erhöhen die Wasser- und die Lösemittelbeständigkeit und bewirken eine Flexibilisierung des Bindemittels.

### BEISPIELE

Erläuterung der Abkürzungen:
- BPA-DGE: = Diglycidylether des Bisphenols A
- TETA: = Triethylentretramin
- RT: = Raumtemperatur
- EP: = Epoxidharz
- Äqu.: = Äquivalentgewicht (Aminwasserstoff)
Alle Mengenangaben sind Angaben in Gewichtsteilen

### A Herstellung eines dualfunktionellen Partialesters auf der Basis eines Bisphenol F-diglycidylethers und Acrylsäure

1 Mol Bisphenol F-diglycidylether = 344 g werden mit 3,5 g Triphenylphosphin als Katalysator und 0,1 g Hydrochinon als Inhibitor versetzt und auf 80 °C erhitzt. Unter Einblasen von Luft wird 1 Mol = 72 g Acrylsäure langsam zugetropft. Man läßt so lange bei 80 °C reagieren, bis eine Säurezahl < 5 mg KOH/g erreicht ist.

### B Herstellung eines dualfunktionellen Partialesters auf der Basis eines Hexandiglycidylethers und Acrylsäure

Unter Verwendung von 1 Mol Hexandiglcyidylether = 296 g wird eine aliphatische Epoxiacrylatverbindung analog A hergestellt.

### Beispiele 1 bis 10

Gemische, hergestellt aus Epoxidharz und Partialester (Beispiele 1, 2, 5 und 6) bzw. Polyethylenglykoldiacrylat (Vergleichsbeispiele 3 und 7) oder Phenoxyethylacrylat (Vergleichsbeispiele 4 und 8) sowie unmodifiziertes Epoxidharz (Vergleichsbeispiele 9 und 10) werden mit aminischen Härtern ausgehärtet.

Bestimmt wird die Wasseraufnahme nach 7-tägiger Härtung sowie die Zug-Scher-Haftfestigkeit (nach DIN 53 283) aus Probekörpern gemäß DIN 53 281 aus 1,6 mm dicken Platten aus Luftfahrtaluminium (Al Cu Mg 2pl).

Als Basisepoxidharz wird in allen Fällen ein Bisphenol A-diglycidyletherharz mit einem Epoxidäquivalentgewicht von 185 g/Äquivalent verwendet.

Um einen guten Vergleich der einzelnen Versuche zu ermöglichen, werden jeweils Mischungen aus 2 Mol BPA-DGE = 740 g und der Menge eines
(Meth)acrylat-Modifizierungsmittels hergestellt, in der eine Doppelbindung enthalten ist.

Als Härtungsmittel werden
a) ein Reaktionsprodukt aus Xylelendiamin, Formaldehyd und Phenol (Mannichbase) und
b) ein Polyaminoamid aus TETA und Tallölfettsäure
verwendet.

Die folgende Tabelle zeigt die Zusammensetzungen der Mischungen der Beispiele 1 bis 10 und die erhaltenen Ergebnisse.

| | 1 | 2 | 3(V) | 4(V) | 5 | 6 | 7(V) | 8(V) | 9(V) | 10(V) |
|---|---|---|---|---|---|---|---|---|---|---|
| BPA-DGE | 740 | 740 | 740 | 740 | 740 | 740 | 740 | 740 | 740 | 740 |
| Partialester gemäß A | 416 | | | | 416 | | | | | |
| Partialester gemäß B | | 368 | | | | 368 | | | | |
| Polyethylenglykol-200-diacrylat | | | 175 | | | | 175 | | | |
| Phenoxiethylacrylat | | | | 192 | | | | 192 | | |
| | | | | | | | | | | |
| Mannichbasenhärter Äqu 92,5 | 552 | 552 | 460 | 460 | | | | | 368 | |
| Polyaminoamidhärter Äqu 140 | | | | | 837 | 837 | 697 | 697 | | 557 |
| | | | | | | | | | | |
| Wasseraufn. in % (Härtung 7 d RT) | | | | | | | | | | |
| n. 1 h Kochen | 0,30 | 0,35 | 1,30 | 0,40 | 0,80 | 1,00 | 2,40 | 1,55 | 0,30 | 0,75 |
| n. 3 h Kochen | 0,45 | 0,65 | 2,60 | 0,75 | 1,50 | 1,80 | 3,90 | 2,60 | 0,40 | 1,30 |
| n. 5 h Kochen | 0,55 | 1,10 | 4,20 | 1,15 | 1,90 | 2,30 | 4,00 | 3,65 | 0,45 | 1,65 |
| | | | | | | | | | | |
| Klebfestigkeit [N/mm²] | | | | | | | | | | |
| (DIN 53 283) an Probekörpern gem. (DIN 53 281, TO2) Härtung 24 h RT | 26,3 | 29,6 | 19,5 | 18,5 | 26,8 | 25,1 | 18,9 | 15,3 | 17,5 | 12,5 |
| 7 d RT | 28,2 | 31,3 | 23,4 | 23,6 | 29,2 | 28,3 | 25,4 | 19,6 | 25,3 | 23,6 |

## Patentansprüche

1. Härtbare Bindemittel auf der Basis von Epoxidharzmischungen, **dadurch gekennzeichnet,** daß sie als Harzkomponente ein Gemisch aus Epoxidharz mit mindestens zwei Epoxidgruppen im Molekül und Partialester einer Di- oder Polyepoxidverbindung mit einer ethylenisch ungesättigten Säure, die im Durchschnitt mindestens eine Epoxid- und eine ethylenisch ungesättigte Gruppe im Molekül enthalten, im Gewichtsverhältnis von 90 : 10 bis 10 : 90 und als Härtungsmittel eine aminische Verbindung mit mindestens einer primären Aminogruppe im Molekül enthalten, wobei die Menge an aminischer Verbindung so gewählt wird, daß für jede ethylenisch ungesättigte Bindung und für jede Epoxidgruppe ein Aminwasserstoffatom zur Verfügung steht.

2. Bindemittel gemäß Anspruch 1, **dadurch gekennzeichnet,** daß ethylenisch ungesättigte Säure Acryl- oder Methacrylsäure ist.

3. Bindemittel nach den Ansprüchen 1 und 2, **dadurch gekennzeichnet,** daß sie zusätzlich flüssige merkaptoendständige Polymere enthalten.

4. Bindemittel nach den Ansprüchen 1 und 2, **dadurch gekennzeichnet,** daß sie zusätzlich Umsetzungsprodukte aus flüssigen merkaptoendständigen Polymeren mit einem Di- oder Polyacrylat oder -methacrylat enthalten.

5. Verwendung der Bindemittel gemäß einem der Ansprüche 1 bis 4 als Injektionsharze.

6. Verwendung der Bindemittel gemäß einem der Ansprüche 1 bis 4 als Bindemittel für Dicht- und Klebstoffe zur Herstellung von Isolierglasscheiben.

7. Verwendung der Bindemittel gemäß einem der Ansprüche 1 bis 4 als Bindemittel für Dübel- und Ankermassen.

## Claims

1. Curable binders based on epoxy resin mixtures, characterized in that they contain a resin component in the form of a mixture of epoxy resin with at least two epoxy groups in the molecule and partial esters of a di- or polyepoxyde compound with an ethylenically unsaturated acid in a weight ratio of from 90 : 10 to 10 : 90 and a curing agent in the form of an amine compound with at least one primary amino group in the molecule, whereas the quantity of amine compound is used that one amine hydrogen atom is present for each ethylenically unsaturated group and for each epoxy group.

2. Binders according to claim 1, characterized in that the ethylenically unsaturated acid is acrylic or methacrylic acid.

3. Binders according to claims 1 and 2, characterized in that they additionally contain liquid mercapto terminated polymers.

4. Binders according to claims 1 and 2, characterized in that they additionally contain reaction products from liquid mercapto terminated polymers with a di- or polyacrylate or -methacrylate.

5. Use of the binders according to one of claims 1 to 4 as injection resins.

6. Use of the binders according to one of claims 1 to 4 as binders for sealants and adhesives for producing isolating glass panes.

7. Use of the binders according to one of claims 1 to 4 as binders for dowel and tie-rod materials.

## Revendications

1. Liants durcisables à base de mélange de résine époxide, caractérisés en ce qu'ils contiennent en tant que composant de résine, une mélange de résine époxide avec au moins deux groupes époxides dans la molécule et les esters partiels d'un composé di- ou polyépoxide avec un acide insaturé éthyleniquement dans un rapport pondéral de 90 : 10 à 10 : 90 et comme durcisseur, un composé aminique avec au moins un group amino primaire dans le molécule, la quantité de composé etant choisi d'une manière qu' il y a un atom de hydrogen d'amine pour chaque groupe insaturée éthyléniquement et pour chaque groupe époxide.

2. Liants selon la revendication 1, caractérisés en ce que l'acide insaturé éthyleniquement est l'acide acrylique ou méthacrylique.

3. Liants selon les revendictions 1 et 2, caractérisés en ce qu'ils contiennent de plus des polymères liquides en position terminale mercapto.

4. Liants selon les revendications 1 et 2, caractérisés en ce qu'ils contiennent de plus des produits de réaction à partir de polymères liquides en position d'extrémité mercapto avec un di- ou polyacralate ou méthacrylate.

5. Utilisation des liants selon l'une des revendications 1 à 4, en tant que résine d'injection.

6. Utilisation des liants selon l'une des revendications 1 à 4, comme liants pour matière d'étanchéité et matière adhésive pour la fabrication de vitres de verre isolant.

7. Utilisation des liants selon l'une des revendications 1 à 4, comme liants pour des pâtes d'ancrage et de cheville.
